# EUROPÄISCHE PATENTSCHRIFT

(11) **EP 0 566 973 B1**
(45) Veröffentlichungstag und Bekanntmachung des Hinweises auf die Patenterteilung: **12.11.1997**
(21) Anmeldenummer: 93106035.4
(22) Anmeldetag: 14.04.1993
(51) Int. Cl.: F16L 5/02, H02G 3/22

(54) **Durchführung für Rohre o.ä.**
Feedthrough for pipes or the like
Traversée pour tuyaux ou similaires

(30) Priorität: 24.04.1992 DE 9205564 U
(43) Veröffentlichungstag der Anmeldung: 27.10.1993
(73) Patentinhaber: DOYMA-Durchführungstechnik Hans-Ullrich Ihlenfeldt, 28876 Oyten (DE)
(72) Erfinder: Ihlenfeldt, Hans-Ullrich, W-2806 Oyten (DE)
(74) Vertreter: Eisenführ, Speiser & Partner

(56) Entgegenhaltungen:
- DE-A- 1 940 855
- DE-A- 3 828 693
- DE-U- 9 012 624
- US-A- 4 061 344

## Beschreibung

Die Erfindung betrifft eine Vorrichtung zum Durchführen mindestens einer geteilten Versorgungs- oder Rohrleitung durch eine Durchgangsbohrung in einer Wand.

Im Bauwesen besteht häufig die Notwendigkeit, Versorgungsleitungen für Gas, Wasser, Strom usw. durch Wände von Gebäuden hindurchzuführen. Insbesondere die Durchführung durch Außenwände erfordert spezielle Dichtungseinsätze, mit denen ein Eindringen von Feuchtigkeit in das Mauerwerk und das Gebäudeinnere verhindert wird und mit denen ggf. auch thermische Ausdehnungen z.B. von innerhalb des Gebäudes verlegten Heizungsrohren ausgeglichen werden können.

Für diese Anwendungen sind für Rohre Rohrdurchführungen in Form von Dichtungseinsätzen bekannt, die zwei von dem Rohr durchsetzte Scheiben sowie ein zwischen beiden Scheiben liegendes und von dem Rohr ebenfalls durchsetztes Gummiteil aufweisen, welches sich durch mittels Schrauben bewirkter Kompression abdichtend einerseits an die Innenwand der Bohrung und andererseits an die Außenfläche des Rohres anlegt. Die Scheiben sind im allgemeinen mit einer dem Durchmesser des durchzuführenden Rohres entsprechenden Bohrung versehen oder aus zwei Hälften zusammengesetzt, so daß sie über das Rohr geführt bzw. um dieses herumgelegt werden können. Es ist jedoch auch möglich, anstelle eines relativ dicken Rohres mehrere dünne Rohre durch eine solche Durchführung hindurchzulegen, wobei die Scheiben dann anstelle einer relativ großen Bohrung mehrere kleine Bohrungen aufweisen, deren Durchmesser jeweils dem Durchmesser der Rohre entspricht.

Die Kompression des zwischen den beiden Scheiben liegenden Gummiteils wird im allgemeinen durch Schrauben bewirkt, die jeweils an beiden Scheiben in der Weise angreifen, daß durch ein Anziehen der Schrauben die Scheiben aufeinanderzubewegt werden. Dadurch legt sich das Gummiteil abdichtend sowohl an die Innenwand der Bohrung als auch an die Außenfläche des mindestens einen Rohres an. Die Rohrdurchführung sowie das Rohr werden dadurch ferner in axialer Richtung in der Bohrung fixiert.

Aus der DE-AS 1 285 800 ist eine Mauerdurchführung für Installationsrohre bekannt, bei der der Durchbruch eines Mauerwerkes mit einem Mauerschutzrohr ausgekleidet ist. Das Mauerschutzrohr dient zur Aufnahme des Installationsrohres, welches durch einen Preßring aus gummielastischem Material gehalten wird, der durch an seinen Stirnseiten anliegende Druckringe mittels Schraubenbolzen elastisch vorspannbar ist.

Aus der DE-GM 1 925 658 und der US-A-4 061 344 sind lösbare Hauseinführungen bekannt, bei denen ebenfalls elastische Dichtringe mittels durch Schrauben bewirkter Kompression an die Innenwand der Bohrung und die Außenwand des durchzuführenden Rohres angepreßt werden. Ferner sind Abdeckflansche vorgesehen, die an dem die Bohrung umgebenden Bereich des Mauerwerkes anliegen und ein Eindringen von Feuchtigkeit u.ä. verhindern sollen.

Insbesondere bei der Durchführung von z.B. Gasleitungen durch die Außenwände von Gebäuden ist es jedoch erforderlich, daß das durchgeführte Rohr in axialer Richtung mit einer bestimmten Mindestfestigkeit gehalten wird. Dadurch soll verhindert werden, daß bei Erdarbeiten und einem versehentlichen Herausreißen des Rohres z.B. mit einem Bagger das Rohr innerhalb des Gebäudes bricht, so daß dort dann das Gas oder ähnliches freigesetzt wird. Mit den bekannten Rohrdurchführungen kann aber nicht sichergestellt werden, daß das Rohr bei einer entsprechenden Zugbelastung außerhalb des Gebäudes abreißt, da sich das Gummiteil nicht so fest an die Innenwand der Bohrung und die Außenfläche des Rohres anlegen kann, daß Zugkräfte abgefangen werden, die so stark sind, daß sie zu einem Bruch des Rohres führen können.

Aus dem DE-GM 1 874 984 ist zwar eine Vorrichtung zum dichten Durchführen von Versorgungsleitungen durch ein Mauerwerk bekannt, bei der eine von der Leitung durchsetzte Scheibe fest mit dieser verbunden ist und auf dem die Bohrung umgebenden Bereich des Mauerwerkes aufliegt. Der Einbau einer solchen Rohrdurchführung ist jedoch sehr aufwendig, da die eigentliche Abdichtung durch Einfüllung von Harz durch speziell dafür vorgesehene Bohrungen in auf dem Mauerwerk aufliegenden Scheiben erfolgen muß, nachdem die Versorgungsleitung mit einer Gewindemutter an der Durchführung festgespannt worden ist. Die Versorgungsleitung muß also zumindest bereichsweise mit einem Außengewinde versehen werden. Ferner müssen auch die Harzeinfüllöffnungen in geeigneter Weise verschließbar sein. Ferner wird durch diese Durchführungsvorrichtung sofort eine feste, unelastische und unlösbare Verbindung erreicht, die ein Nachjustieren oder einen zerstörungsfreien Ausbau der Versorgungsleitung unmöglich macht.

Der Erfindung liegt deshalb die Aufgabe zugrunde, eine Durchführung der eingangs genannten Art für eine Versorgungs- oder Rohrleitung o.ä. anzugeben, mit der auf einfache Weise sicher vermieden wird, daß bei entsprechender Zugbelastung der Versorgungs- oder Rohrleitung z.B. von außerhalb eines Gebäudes ein Abriß oder Bruch innerhalb des Gebäudes auftritt.

Gemäß der Erfindung wird diese Aufgabe durch eine Vorrichtung der eingangs genannten Art gelöst, welche mindestens einen Leitungsabschnitt aufweist, welcher an seinen beiden freien Enden mit Endstücken der Versorgungsleitungsteile verbindbar ist und welcher zwei Scheiben und ein zwischen den beiden Scheiben angeordnetes Gummiteil durchsetzt, von denen eine der beiden Scheiben einen wesentlich größeren Außendurchmesser als das Gummiteil hat und mit dem Leitungsabschnitt sowie gegebenenfalls weiteren Leitungsabschnitten fest verbunden ist, wobei der über das Gummiteil radial herausragende Randbereich der Scheibe zur Auflage auf dem die Durchgangsbohrung umgebenden Wandabschnitt bestimmt ist, und von denen das Gummiteil mit Hilfe von Schrauben zwischen den beiden Scheiben derart komprimierbar ist, daß es sich quer zur Kompressionsrichtung ausdehnt, um sich an die Innenwand der Bohrung und die Außenwand des Leitungsabschnitts oder die Außenwände der Leitungsabschnitte anzulegen.

Vorteilhaft bei dieser Lösung ist insbesondere, daß die Durchführung gleichermaßen für einzelne Rohre mit relativ großem Durchmesser wie auch für mehrere relativ kleine Rohre geeignet ist. Die Durchführung kann ferner in einfacher Weise an die Zugfestigkeit der Rohre angepaßt werden.

Anstelle mindestens eines Rohres kann in gleicher Weise auch ein Kabel durchgeführt werden, welches in dem die Wand durchsetzenden Bereich in Längsrichtung dreiteilig ausgebildet ist.

Die Durchführung kann auch in Futterrohre eingesetzt werden.

Bei einer vorteilhaften Ausführungsform der Erfindung ist der mindestens eine Leitungsabschnitt als Rohrdoppelnippel ausgebildet, der an beiden Enden jeweils ein Gewinde aufweist und mit den Versorgungsleitungsteilen verschraubbar ist.

Zur Durchführung von Kabeln weist ein entsprechender Kabelabschnitt an beiden Enden, z.B. eine Steckverbindung auf, mit der er mit jeweiligen ersten und zweiten, beiderseits der Wand liegenden Kabelendstücken verbindbar ist.

Die erste Scheibe ist ferner mit dem sie durchsetzenden, mindestens einen Leitungsabschnitt durch Schweißen, im Fall eines Kabels mittels einer Schelle, durch Kleben o.ä. verbunden.

Das zwischen beiden Scheiben liegende Gummiteil erstreckt sich vorzugsweise in axialer Richtung im wesentlichen durch die gesamte Bohrung. Das Gummiteil kann auch mehrteilig ausgebildet sein.

Der Durchmesser der zweiten Scheibe ist vorzugsweise geringfügig kleiner als der Durchmesser der Bohrung.

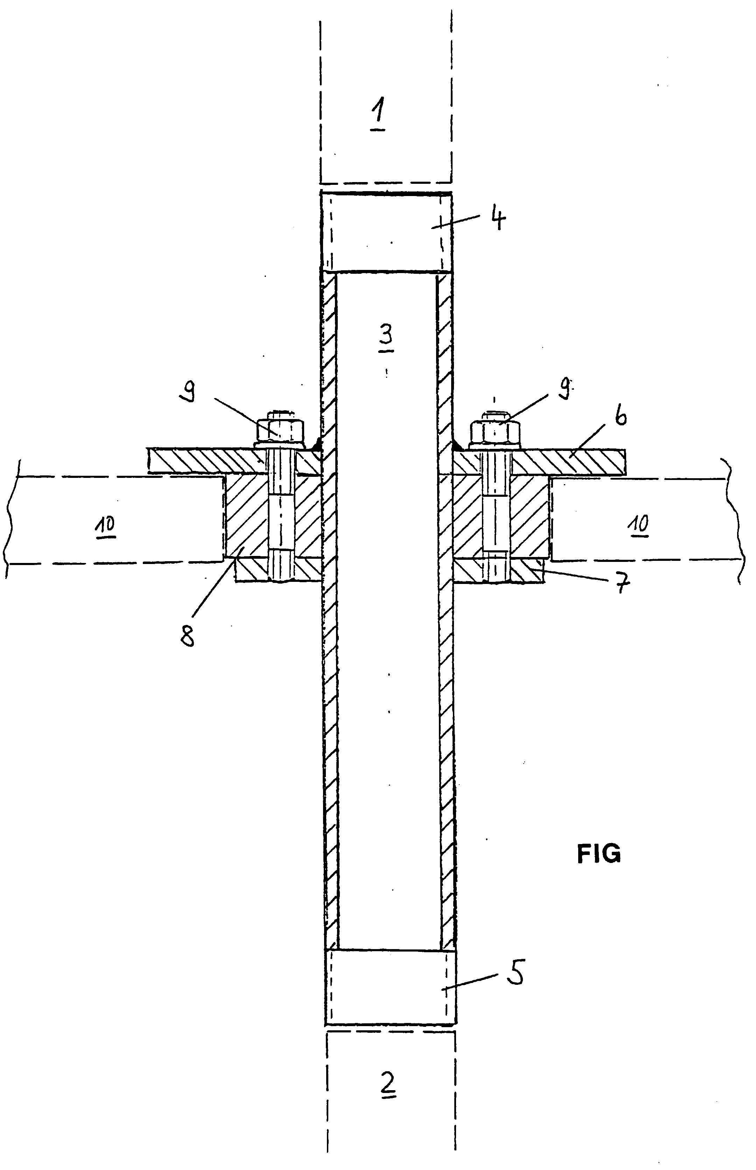

Weitere Einzelheiten, Merkmale und Vorteile der Erfindung ergeben sich aus der nachfolgenden Beschreibung eines Ausführungsbeispiels anhand der Zeichnung.

Die Figur zeigt eine Ausführungsform einer erfindungsgemäßen Durchführung für ein einzelnes Rohr mit relativ großem Durchmesser.

Das Rohr ist in dem die Wand durchsetzenden Bereich dreiteilig ausgebildet. Ein erster und ein zweiter Rohrteil 1, 2 werden durch beiderseits der Wand liegende Endstücke von Rohren gebildet, die durch eine in einer Wand 10 vorhandene Bohrung zu verbinden sind. Das Verbindungselement wird durch ein drittes, durch die Bohrung verlaufendes Rohrteil 3 gebildet, welches an seinen beiden Enden mit Gewinden 4, 5 versehen ist, mit denen es mit dem ersten und zweiten Rohrteil 1, 2 verschraubt wird. Die Durchführung weist weiterhin eine erste Scheibe 6 auf, die 2 verschraubt wird. Die Durchführung weist weiterhin eine erste Scheibe 6 auf, die von dem dritten Rohrteil 3 durchsetzt wird und mit diesem fest, z.B. durch Schweißen verbunden ist. Der Durchmesser sowie die Dicke der ersten Scheibe 6 werden entsprechend der gewünschten Zugfestigkeit der Durchführung festgelegt. Der Durchmesser der ersten Scheibe 6 ist dabei so groß, daß sie auf dem die Bohrung umgebenden Bereich der Wand 10 aufliegt und Zugkräfte, die auf das Rohr von der gegenüberliegenden Seite der Wand einwirken, auffängt.

Ferner ist eine zweite Scheibe 7 vorgesehen, deren Durchmesser im wesentlichen dem Durchmesser der Wandbohrung entspricht. Zwischen beiden Scheiben greifen mit Muttern versehene Schrauben 9 an, die als Spannmittel dienen und bewirken, daß sich die beiden Scheiben aufeinanderzubewegen.

Zwischen beiden Scheiben und somit in der Wandbohrung liegend befindet sich ein Gummiteil 8, welches ebenso wie die erste und zweite Scheibe von dem dritten Rohrteil 3 durchsetzt ist. Dieses Gummiteil füllt im wesentlichen die Wandbohrung aus.

Durch das Anziehen der Schrauben 9, welche anstelle mit einer Mutter auch mit einem in einer der Scheiben vorgesehenen Gewinde eingreifen können, werden die beiden Scheiben aufeinanderzubewegt, wodurch auf das Gummiteil 8 ein Kompressionsdruck ausgeübt wird. Diese Kompression führt dazu, daß sich das Gummiteil sowohl an die Innenwand der Wandbohrung als auch an das Rohr anlegt und auf diese Weise ein luft- und wasserdichter Abschluß erzielt wird. Im Gegensatz zu der eingangs beschriebenen bekannten Durchführung braucht das Gummiteil aber im wesentlichen keine in axialer Richtung des Rohres wirkenden Kräfte aufzunehmen. Durch die Abstützung der ersten Scheibe 6 auf dem die Bohrung umgebenden Wandbereich sowie die feste Verbindung zwischen dem dritten Rohrteil 3 und dieser Scheibe wird erreicht, daß ein Abriß des Rohres innerhalb des Gebäudes nicht möglich ist.

Die Rohrdurchführung kann für bestimmte, häufig verwendete Rohre vorgefertigt werden und braucht dann nur noch in die Wandbohrung eingesetzt und mit den Rohrenden verschraubt zu werden.

## Patentansprüche

1. Vorrichtung zum Durchführen mindestens einer geteilten Versorgungs- oder Rohrleitung durch eine Durchgangsbohrung in einer Wand,
bei der die Vorrichtung mindestens einen Leitungsabschnitt (3) aufweist, welcher an seinen beiden freien Enden mit Endstücken der Versorgungsleitungsteile (1, 2) verbindbar ist und welcher zwei Scheiben (6, 7) und ein zwischen den beiden Scheiben (6, 7) angeordnetes Gummiteil (8) durchsetzt, von denen eine der beiden Scheiben (6) einen wesentlich größeren Außendurchmesser als das Gummiteil (8) hat und mit dem Leitungsabschnitt (3) sowie gegebenenfalls weiteren Leitungsabschnitten fest verbunden ist, wobei der über das Gummiteil (8) radial herausragende Randbereich der Scheibe (6) zur Auflage auf dem die Durchgangsbohrung umgebenden Wandabschnitt bestimmt ist, und von denen das Gummiteil (8) mit Hilfe von Schrauben zwischen den beiden Scheiben (6, 7) derart komprimierbar ist, daß es sich quer zur Kompressionsrichtung ausdehnt, um sich an die Innenwand der Bohrung und die Außenwand des Leitungsabschnitts (3) oder die Außenwände der Leitungsabschnitte anzulegen.

2. Durchführung nach Anspruch 1,
dadurch gekennzeichnet, daß der Leitungsabschnitt (3) als Rohrdoppelnippel ausgebildet ist, der an den beiden Enden jeweils ein Gewinde (4, 5) aufweist und mit den Versorgungsleitungsteilen (1, 2) verschraubbar ist.

3. Durchführung nach Anspruch 1 oder 2,
dadurch gekennzeichnet, daß die erste Scheibe (6) mit dem sie durchsetzenden mindestens einen Leitungsabschnitt (3) durch Schweißen verbunden ist.

4. Durchführung nach mindestens einem der Ansprüche 1 bis 3,
dadurch gekennzeichnet, daß sich das Gummiteil (8) in axialer Richtung im wesentlichen durch die gesamte Bohrung erstreckt.

5. Durchführung nach Anspruch 1,
dadurch gekennzeichnet, daß die Versorgungsleitung aus mindestens einem Kabel besteht.

## Claims

1. Throughput system for the passage of at least one divided supply line or pipe through an orifice in a wall,
wherein the system has at least one line section (3) which can be connected at its two free ends with end pieces of the supply line sections (1, 2), wherein are inserted two rubber discs (6, 7) and a rubber part (8) set between the rubber discs (6, 7), of which one of the two discs (6) has a much larger exterior diameter than the rubber part (8) and is permanently connected to the line section (3) and, if present, to other line sections, the purpose of the border part of the rubber disc (6) which extends radially over the rubber part (8) being to cover the wall section surrounding the throughput orifice and of which the rubber part (8) can be compressed by means of screws in such a way between the two discs (6, 7), that it expands transversally to the direction of compression, so that it tightly fits against the interior side of the throughput orifice and against the exterior side of line section (3), or against the exterior sides of the line sections.

2. Throughput system as per claim 1,
characterised in that the line section (3) is shaped as a double pipe nipple, threaded at both ends (4, 5) so that it can be screwed to the supply lines (1, 2).

3. Throughput system as per claim 1 or 2,
characterised in that the first disc (6) is welded to the at least one line section (3) which goes through it.

4. Throughput system according to at least one of the claims 1 to 3,
characterised in that that the rubber part (8) mainly extends in axial direction through the total orifice.

5. Throughput system as per claim 1,
characterised in that the supply line consists at least of one cable.

## Revendications

1. Dispositif pour permettre le passage d'au moins une ligne d'alimentation ou consistant en une tuyauterie à travers un orifice percé dans un mur,
le dispositif présentant au moins une section de ligne (3) pouvant être raccordée aux deux extrémité libres à des extrémités des sections de ligne d'alimentation (1, 2), dans laquelle sont insérés deux disques de caoutchouc (6, 7) et une pièce de caoutchouc (8) disposée entre les deux disques (6, 7), l'un desdits disques (6) présentant un diamètre extérieur beaucoup plus important que la pièce de caoutchouc (8) et est rattaché de manière permanente à la section de ligne (3) et à d'autres sections de lignes éventuellement présentes, l'objet du bord du disque (6), qui s'étend radialement sur la pièce de caoutchouc (8), étant de couvrir la section du mur entourant l'orifice de passage, ladite pièce de caoutchouc (8) pouvant être comprimée au moyen de vis entre les deux disques (6, 7) de telle manière qu'elle se dilate transversalement par rapport à la direction de compression, de sorte qu'elle se serre fortement contre la paroi intérieure de l'orifice de passage et contre la parois extérieure de la section de ligne (3) ou encore contre les parois extérieures des sections de lignes.

2. Passage selon la revendication 1,
caractérisé en ce que la section de ligne (3) a la forme d'un double raccord pour tuyaux, fileté aux deux extrémités (4, 5), de sorte qu'il puisse être vissé aux lignes d'alimentation (1, 2).

3. Passage selon l'une quelconque des revendications 1 ou 2,
caractérisé en ce que le premier disque (6) est soudé à au moins une des sections de ligne (3) qui le traversent.

4. Passage selon l'une quelconque des revendications 1 à 3,
caractérisé en ce que la pièce de caoutchouc (8) s'étend essentiellement en direction axiale à travers l'orifice total.

5. Passage selon la revendication 1,
caractérisé en ce que la ligne d'alimentation consiste en au moins un câble.
